## Europäisches Patentamt

## European Patent Office

## Office européen des brevets

(11) Veröffentlichungsnummer: **0 069 919**

**A1**

(12) # EUROPÄISCHE PATENTANMELDUNG

(21) Anmeldenummer: **82105838.5**

(22) Anmeldetag: **30.06.82**

(51) Int. Cl.³: **B 29 C 1/16**
**B 29 F 1/00**

(30) Priorität: **14.07.81 DE 3127797**

(43) Veröffentlichungstag der Anmeldung:
**19.01.83 Patentblatt 83/3**

(84) Benannte Vertragsstaaten:
**AT CH FR GB LI NL**

(71) Anmelder: **Mannesmann Demag Kunststofftechnik**
**Zweigniederlassung der Mannesmann Demag**
**Aktiengesellschaft**
**Altdorfer Strasse 15**
**D-8501 Schwaig(DE)**

(72) Erfinder: **Schmidt, Gerhard**
**Ludwig-Thoma-Strasse 8**
**D-8501 Wendelstein(DE)**

(72) Erfinder: **Fruntzek, Peter**
**Lindenstrasse 22**
**D-8541 Götzenreuth(DE)**

(74) Vertreter: **LOUIS, PÖHLAU, LOHRENTZ & SEGETH**
**Kesslerplatz 1**
**D-8500 Nürnberg(DE)**

(54) **Aufspann- und Anschlussvorrichtung für Werkzeuge von Spritzgiessmaschinen und damit zu verwendendes Werkzeug.**

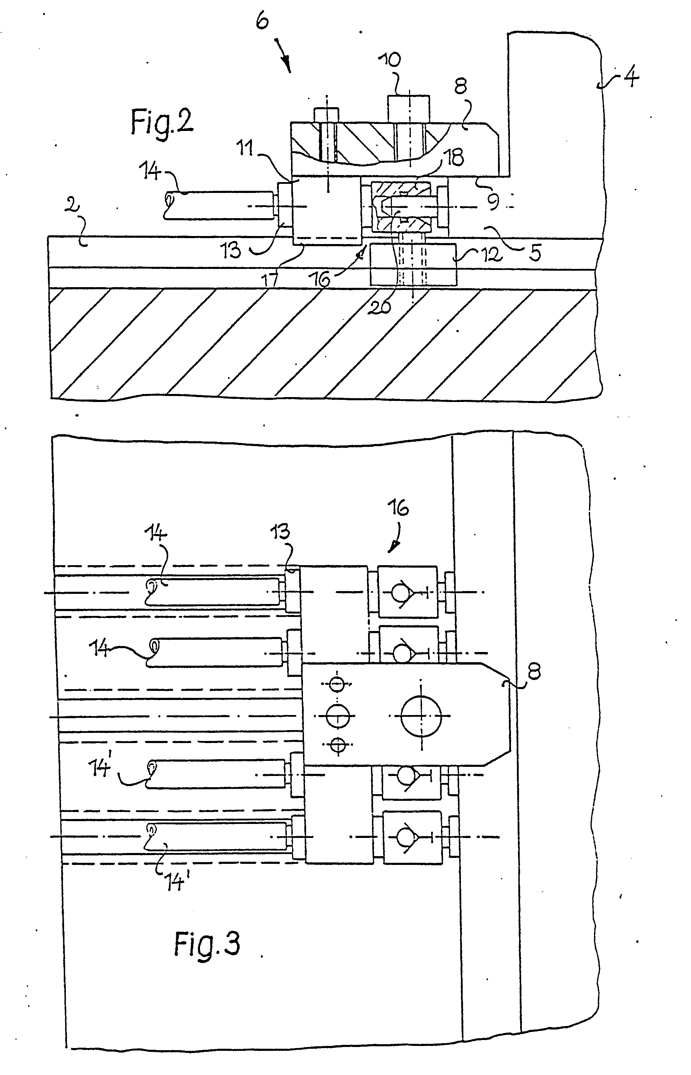

(57) Eine kombinierte Auspann- und Anschlußvorrichtung für Werkzeuge von Spritzgießmaschinen oder dgl., die eine Spannpratze (8) beinhaltet, welche an einer Seite Anschlüsse (13) für Versorgungsleitungen (14) und an der anderen Seite damit in Verbindung stehende weitere Anschlüsse (16) zur Koppelung mit Mündungsanschlüssen (20), z.B. eines Kühlsystems im Inneren des Werkzeuges (4) aufweist. Die Mündungsanschlüsse (20) befinden sich in einer Flanschleiste (5) des Werkzeuges (4), die in der Spannstellung von der Spannpratze (8) übergriffen wird, wobei die genannten weiteren Anschlüsse (16) an der Spannpratze (8) nach einer vorteilhaften Ausführung so angeordnet sind, daß deren Verbindung mit den Mündungsanschlüssen (20) an der Flanschleiste (5) im Zuge der Heranbewegung der Spannpratze (8) an das Werkzeug (4) hergestellt wird. Durch Auswahl übereinstimmender Abstände der weiteren Anschlüsse (16) an der Spannpratze (8) und der Mündungsanschlüsse (20) am Werkzeug (4) und durch deren Zuordnung zur Befestigung der Spannpratze (8) bzw. des Werkzeuges (4) an der Werkzeugaufspannplatte (1) ist dafür gesorgt, daß ohne zusätzliche Einflußnahme die zu verbindenden Kontakte miteinander korrespondieren (Fig. 2).

Fig.2

Croydon Printing Company Ltd.

Aufspann- und Anschlußvorrichtung für Werkzeuge
von Spritzgießmaschinen und damit zu verwendendes
Werkzeug

Die Erfindung betrifft eine Aufspann- und Anschlußvorrichtung für Werkzeuge von Spritzgießmaschinen oder
dgl., mit einer an einer Werkzeugaufspannplatte der
Spritzgießmaschine befestigbaren Spannpratze, die im
aufgespannten Zustand des Werkzeuges eine an dem
Werkzeug ausgebildete Flanschleiste übergreift.

Spritzgießmaschinen zur Verarbeitung von Kunststoffen
besitzen zur Befestigung der Form- oder Werkzeughälften
sog. Werkzeugaufspannplatten, die - normalerweise in
Übereinstimmung mit DIN. 16 754 vorgesehene - Schraubenlöcher oder Nuten zur Befestigung von Spannpratzen für
das Werkzeug aufweisen. Die der Spritzeinheit zugewendete Werkzeugaufspannplatte besitzt eine zentrale
Öffnung für den Zugang der Spritzdüse zum Angußkanal
des Werkzeuges, die zugleich zur Zentrierung und Ausrichtung des Werkzeuges herangezogen wird. In den in
den Werkzeugaufspannplatten vorgesehenen Schraubenlöchern oder den Nuten sind Spannpratzen befestigbar, deren Spannfläche einen Absatz oder eine flanschartige Leiste am Werkzeug übergreifen kann, so daß mit dem Anziehen der Befestigungsschraube das Werkzeug gegen die Werkzeugaufspannplatte gepresst wird.

Insbesondere in Kunststoff verarbeitenden Betrieben, in denen ein vielfältiges Programm an Kunststoff-Spritzteilen hergestellt wird, ist eine häufige Umrüstung der Spritzgießmaschinen erforderlich, die zeitaufwendig ist und daher einen nicht unbeträchtlichen Produktionsausfall verursacht. Es gibt bereits Vorschläge, den Zeitaufwand der Umrüstung durch Schnell-Aufspannvorrichtungen zu verringern (vgl. z.B. DE-OSen 29 38 665 und 29 47 938), die nach der exakten Positionierung der Werkzeughälften an den Werkzeugaufspannplatten mechanisch, z.B. hydraulisch oder pneumatisch, betätigt werden und den Spannvorgang im Vergleich zu dem an den herkömmlichen Spannpratzen erforderlichen Festziehen der Befestigungsschraube rascher durchzuführen gestatten. Eine wesentliche Verminderung des Zeitaufwandes für die Umrüstung ist allerdings dadurch bisher nicht gelungen, weil das eigentliche Aufspannen des Werkzeuges nur einen verhältnismässig geringen Teil der Umrüstzeit in Anspruch nimmt, während der grössere Teil dafür verbraucht wird, das Werkzeug an die notwendigen Versorgungsleitungen anzupassen und anzuschließen und diese Anschlüsse zu kontrollieren. Versorgungsleitungen dieser Art sind z.B. Zu- und Ableitungen für ein flüssiges Kühl- oder Heizmedium zum Temperieren des Werkzeuges, Stromanschlüsse, falls eine elektrische Werkzeugbeheizung vorgenommen wird, Druckluftanschlüsse zum Ausblasen des Kanalsystems für die Temperierung und zum Betätigen von Auswerfern und ggf. pneumatisch betätigbaren Schnell-Aufspannvorrichtungen. Der Zeitaufwand erhöht sich noch, wenn - insbesondere bei Werkzeugen für grosse Gießteile - zonenweise auch unterschiedliche Temperaturbereiche temperiert werden müssen, da hierbei eine
entsprechend höhere Anzahl von Anschlüssen vorhanden
ist. Eine Herabsetzung der für diese Umrüstarbeit
notwendigen Zeit durch konstruktive Maßnahmen ist
bisher in wirkungsvoller Weise noch nicht gelungen.

Der Erfindung liegt daher die Aufgabe zugrunde, eine
Vorrichtung zu schaffen, durch die die Montagezeit
beim Einrichten eines neuen Werkzeuges, insbesondere
die Umrüstzeit beim Wechsel zu einem neuen Werkzeug
auf einer Spritzgießmaschine erheblich herabgesetzt
werden kann und Anschlußfehler vermieden werden.
Darüber hinaus soll die Vorrichtung so ausgestattet
sein, daß sie ohne weiteres an bereits bestehenden
Spritzgießmaschinen mit normgerechten Werkzeugaufspannplatten eingesetzt werden kann.

Erfindungsgemäß wird diese Aufgabe durch eine einheitliche Aufspann- und Anschlußvorrichtung mit einer mit
einer Flanschleiste am Werkzeug zusammenwirkenden
Spannpratze erreicht, die mindestens eine Leitung zur
Zufuhr eines Temperiermediums, von elektrischem Strom
oder von Druckluft usw. zum Werkzeug aufweist, und
an einer ihrer zu der Flanschleiste des Werkzeugs gerichteten Flächen mindestens einen mit dem ersten
Anschluß verbundenen weiteren Anschluß besitzt, der
in Spannstellung der Spannpratze im aufgespannten Zustand des Werkzeuges an eine in der Flanschleiste
mündende, z.B. zu einem Temperiersystem des Werkzeuges
führende Leitung angeschlossen ist.

Dadurch, daß erfindungsgemäß die notwendigen Versorgungsanschlüsse für das Werkzeug in der Aufspannvorrichtung integriert sind,so daß eine einheitliche Aufspann- und
Anschlußvorrichtung vorliegt, und weiterhin dadurch,
daß die Mündungsanschlüsse der jeweiligen im Werkzeug
vorgesehenen Einrichtungen, z.B. des Kanalsystems für
eine Flüssigkeitskühlung, an einer bestimmten Stelle
der Flanschleiste des Werkzeuges zusammengefasst sind,
die auch den Spannbereich bildet, ist eine eindeutige
Zuordnung der Versorgungsanschlüsse gewährleistet. Die
ersten Anschlüsse an der Spannpratze stellen eine
Verbindung zwischen den jeweiligen Zuleitungen und
den weiteren Anschlüssen an der Spannpratze her, die
mit den Mündungsanschlüssen gekoppelt werden können:
Legt man für die Anordnung der weiteren Anschlüsse
an der Spannpratze jeweils eine bestimmte Reihenfolge
oder Anordnung fest, z.B. links Zulauf, rechts Ablauf
des Temperiermediums, und ordnet die Mündungsanschlüsse an der Flanschleiste aller Werkzeuge in
gleicher Weise an, so erhält man allein durch das
Anlegen der Spannpratze bereits die richtige Zuordnung
der Anschlüsse, so daß eine weitere Kontrolle nicht
nötig ist. Darüber hinaus fällt der Vorgang des Aufspannens des Werkzeuges mit dem Anschlußvorgang selbst
zusammen, so daß gesonderte Manipulationen mit dem
damit verbundenen Zeitaufwand wegfallen.

Nach einer vorteilhaften Ausführung des Erfindungsgedankens ist vorgesehen, daß der weitere Anschluß der
relativ zu der Werkzeugaufspannplatte verschiebbaren
Spannpratze und der zugehörige Mündungsanschluß an der
Flanschleiste des an der Werkzeugaufspannplatte zentrierten
Werkzeuges in der Bewegungsbahn der Spannpratze liegen,
derart, daß die Koppelung dieser beiden Anschlüsse im
Zuge der Verschiebung der Spannpratze in Richtung auf
die Flanschleiste erfolgt. Hierdurch wird eine weitere
Vereinfachung mit einer Zeiteinsparung erreicht, weil

die Verbindung der Anschlüsse untereinander schon mit dem Heranfahren der Spannpratze an die Flanschleiste hergestellt wird, so daß eine gesonderte Betätigung der Anschlüsse nicht notwendig ist. Das Heranfahren der Spannpratzen an das Werkzeug erfolgt dabei in üblicher Weise, da die Spannpratzen entweder in Nuten der Werkzeugaufspannplatte mittels eines Gleitsteines senkrecht zum Werkzeugseitenrand mit der Flanschleiste verschiebbar sind oder ein Teil der Spannpratze gegenüber einem feststehenden, in einer Schraubenbohrung der Werkzeugaufspannplatte befestigten Teil verschoben werden kann.

Es ist aber auch möglich, den mit der jeweiligen Zuleitung in Verbindung stehenden ersten Anschluß und den zur Koppelung mit dem Mündungsanschluß am Werkzeug bestimmten weiteren Anschluß zu einem einheitlichen Anschlußkörper zu vereinigen und diesen in der Spannpratze derart verschiebbar zu lagern, daß seine Koppelung mit dem Mündungsanschluß an der Flanschleiste durch blosses Heranschieben nach dem Anziehen der Spannpratze erfolgen kann. Auch hierbei wird der Umstand ausgenützt, daß durch die Anordnung der Spannpratze in der Spannstellung die Anschlüsse in der Spannpratze und die Mündungsanschlüsse an der Flanschleiste bereits zueinander fluchtend ausgerichtet sind, so daß ohne Einpassen oder Zielen ihre Verbindung hergestellt werden kann.

Für diejenige Ausführungsform, bei der die Koppelung der Anschlüsse sich allein durch das Heranführen der Spannpratze an die Flanschleiste vollzieht, kommen nach einer vorteilhaften Weiterbildung vor allem Aufstoßventile in Betracht, die an einer zu der Spannfläche der Spannpratze annähernd senkrechten Stirnfläche

- 6 -

angeordnet sind. Diese Aufstoßventile werden durch von der Flanschleiste vorstehende Mündungsanschlüsse des Werkzeuges betätigt. Beim Abziehen der Spannpratze schließen sich die Aufstoßventile selbsttätig durch Federwirkung. Durch diese Ausgestaltung ist gewährleistet, daß nur diejenigen Versorgungsleitungen an der Spannpratze geöffnet werden, die bei dem jeweiligen Werkzeug auch tatsächlich benötigt werden. Es kann nämlich daran gedacht werden, einheitlich ausgebildete Spannpratzen mit Anschlüssen verschiedener Art auszustattet, so daß sie z.B. sowohl für die Zu- und Abführung eines flüssigen Temperiermittels als auch für die Zuführung von elektrischem Strom und Druckluft geeignet sind. Werden die zugehörigen Mündungsanschlüsse an der Flanschleiste des Werkzeuges entsprechend angeordnet, vorzugsweise unter Bezugnahme auf die Nuten- oder Schraubenlochbilder gemäß DIN 16 754, so erfolgt durch das Heranführen der Spannpratze an das Werkzeug ohne weiteres die richtige Steckverbindung mit dem Werkzeug. In noch weiterer Ausgestaltung kann dieser Gedanke bei der Automatisierung des Betriebes einer Spritzgießmaschine vervollständigt werden, indem durch eine NC-Steuerung (Programmsteuerung) die entsprechend codierte und von dem Programm abfragbare Spannpratze angesteuert wird.

Nach einem weiteren Gedanken kann eine so ausgebildete Spannpratze auch ein Umschaltventil aufweisen, durch welches eine Druckluftzuleitung auf den Anschluß für die Zuleitung eines Temperiermediums geschaltet werden kann, so daß am Ende der Benutzungsdauer eines bestimmten Werkzeuges das Kanalsystem im Werkzeug - ggf. auch durch Programmsteuerung - ausgeblasen und getrocknet werden kann.

Die zur Flanschleiste gerichteten Anschlüsse in der Spannpratze sind zweckmässigerweise in einem Stützkörper der Spannpratze untergebracht, der - wie immer bei derartigen Spannpratzen - zur Aufnahme der von der Befestigungsschraube am freien Ende der Spannpratze erzeugten Stützkraft dient. Um sicherzustellen, daß beim Heranführen der Spannpratze an die Flanschleiste des Werkzeuges die zusammenwirkenden Anschlüsse fluchtend aufeinandertreffen, kann der Stützkörper einen Führungsansatz aufweisen, der in die auf der Werkzeugaufspannplatte vorgesehenen Nuten eingreift. Sind in der Werkzeugaufspannplatte Nuten nicht vorhanden, sondern nur Schraubenbohrungen, so trägt der verschiebliche Teil der Spannpratze eine Führungsfläche, die mit einem zusätzlich an der Werkzeugaufspannplatte befestigbaren Führungselement zusammenwirkt.

Der beanspruchte Schutz richtet sich auch auf ein Werkzeug für Spritzgießmaschinen, das mit der erfindungsgemässen Aufspann- und Anschlußvorrichtung verwendet werden soll. Das Werkzeug ist gekennzeichnet durch eine - vorzugsweise durchgehende - Flanschleiste, an der eine oder mehrere Spannpratzen angreifen können und in der die Anschlüsse für im Werkzeug vorgesehene Versorgungsleitungen in einer solchen Anordnung münden, die auf die entsprechenden Anschlüsse an der oder den Spannpratzen abgestimmt ist.

Weitere Vorteile und Merkmale der vorliegenden Erfindung ergeben sich aus der nachfolgenden Beschreibung bevor- zugter Ausführungsbeispiele anhand der beiliegenden Zeichnungen sowie aus weiteren Unteransprüchen. In den Zeichnungen zeigen:

Fig. 1        eine Draufsicht auf eine Werkzeugaufspannplatte mit einem darauf durch
              erfindungsgemässe Aufspann- und Anschlußvorrichtungen aufgespannten, ebenfalls
              nach der Erfindung ausgestalteten Gießwerkzeug;

Fig. 2        eine Seitenansicht einer Aufspann- und
              Anschlußvorrichtung in vergrössertem Maßstab,
              teilweise geschnitten;

Fig. 3        eine Draufsicht auf eine Aufspann- und
              Anschlußvorrichtung mit einer grösseren
              Anzahl von Anschlüssen;

Fig. 4, 5     eine Schnittdarstellung (analog zu Fig. 2)
              einer modifizierten Ausführungsform der
              Aufspann- und Anschlußvorrichtung sowie
              eine Draufsicht;

Fig. 6        eine zu Fig. 1 analoge Draufsicht auf eine
              Werkzeugaufspannplatte mit darauf aufgespanntem Werkzeug und mit einer weiteren
              Abwandlung der erfindungsgemässen Aufspann-
              und Anschlußvorrichtung;

Fig. 7        einen Schnitt durch eine Aufspann- und
              Anschlußvorrichtung gemäß Fig. 6 (analog zu
              Fig. 2);

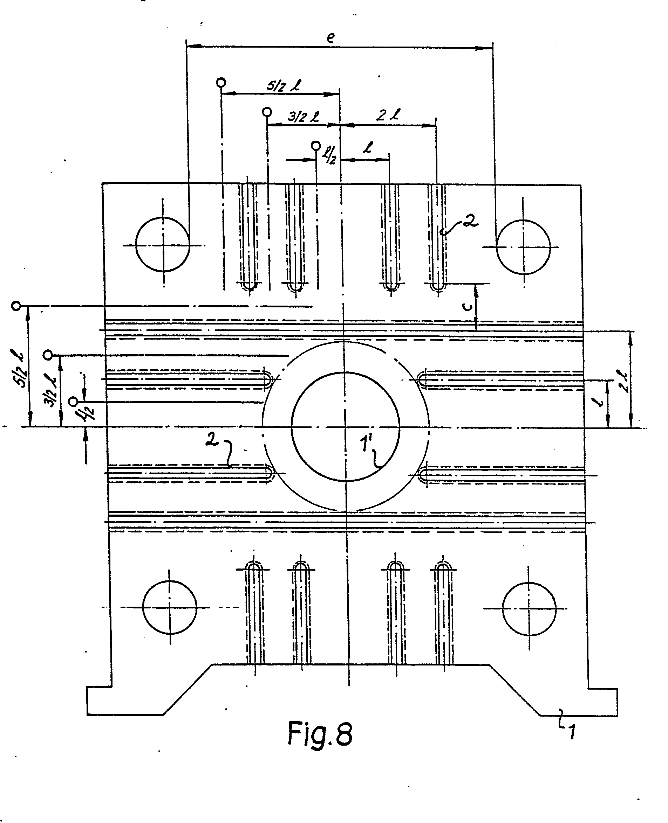

Fig. 8        eine Darstellung der Nutenanordnung einer
              Werkzeugaufspannplatte gemäß DIN 16 754 mit
              Angaben über eine vorteilhafte normierte
              Anordnung der Mündungsanschlüsse an der
              Flanschleiste eines Werkzeuges bzw. an den
              Spannpratzen der erfindungsgemäßen Aufspann-
              und Anschlußvorrichtung , und

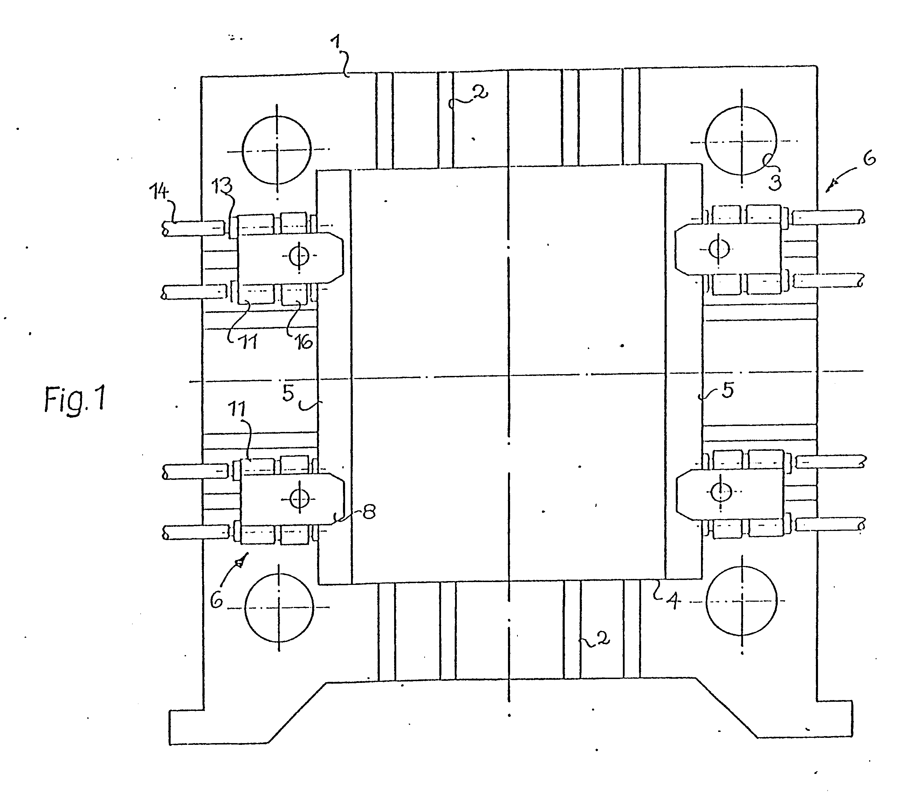

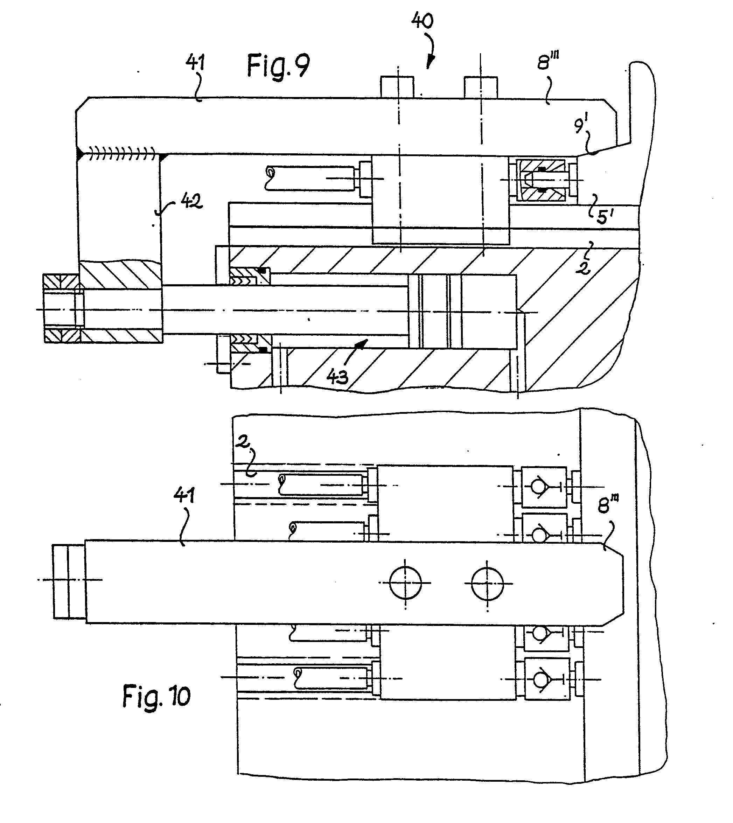

Fig. 9, 1o    Seitenansicht, teilweise geschnitten und
              Draufsicht auf eine Aufspann- und Anschluß-
              vorrichtung mit hydraulischer oder pneu-
              matischer Betätigung.

Die Fig. 1 zeigt in Draufsicht eine nach DIN 16 754 ausgebildete Werkzeugaufspannplatte 1, die mit T-förmigen
Nuten 2 ausgestattet ist. In den Eckbereichen der Werkzeugaufspannplatte 1 sind Durchtrittsöffnungen 3 für
die nicht gezeigten Holme der Spritzgießmaschine in einer
quadratischen Anordnung vorgesehen. Eine Formhälfte 4
eines Gießwerkzeuges, dessen die innere Ausbildung
betreffende Einzelheiten hier nicht von Bedeutung sind,
weist an den beiden gegenüberliegenden Seiten je eine
von oben nach unten durchgehende, d.h. sich über die
gesamte Länge des Werkzeuges erstreckende Flanschleiste
5 auf, deren Ausbildung und relative Grösse näher aus
Fig. 2 ersichtlich ist. Die Werkzeughälfte 4 ist auf
der Werkzeugaufspannplatte 1 durch vier im Ganzen jeweils
mit 6 bezeichnete Aufspann- und Anschlußvorrichtungen
aufgespannt.

Jede der Vorrichtungen 6 besteht im wesentlichen aus
einer Spannpratze 8 mit einer Spannfläche 9, aus einer
Befestigungsschraube 1o, die mit einem in eine Nut 2
einführbaren Gleitstein 12 in Verbindung steht, aus
einem der Spannfläche 9 bezüglich der Befestigungsschraube 1o gegenüberliegenden Stützkörper 11 und aus
Anschlüssen 13 für Versorgungsleitungen 14 sowie aus
im Ganzen mit 16 bezeichneten weiteren Anschlüssen.

Der Stützkörper 11 ist mit dem Oberteil der Spannpratze 8
verschraubt (Fig. 2) und weist an seiner Unterseite eine
gestrichelt angedeutete Führungsrippe 17 auf, die in der Nut 2 geführt ist.

Jeder der Anschlüsse 16 ist als Aufstoßventil 18 ausgebildet, das einen nicht näher gezeigten federbelasteten und nach Art eines Rückschlagventils betätigbaren Ventilkörper besitzt, und steht mit dem an der Rückseite des Stützkörpers 11 jeweils zugeordneten Anschluß 13 in Verbindung. An der Flanschleiste 5 münden im Längsabstand, der dem Abstand der beiden Anschlüsse 16 der Vorrichtung 6 entspricht, vorspringende Mündungsanschlüsse 20 in Form von Rohrenden, die an ihrem freien Ende konisch angefast sind. In dem Ausführungsbeispiel gemäß den Fig. 1 und 2 handelt es sich bei den dort gezeigten Versorgungsleitungen 14 beispielsweise um eine Zuleitung und eine Ableitung für Kühlwasser, und die über die weiteren Anschlüsse 16 damit verbundenen Mündungsanschlüsse 20 stellen die Enden eines in dem Werkzeug 4 ausgebildeten, nicht näher dargestellten Kühlkanalsystems dar.

Wie sich aus Fig. 1 ergibt, erstreckt sich der Stützkörper 11 seitlich über die Spannpratze 8 hinaus, so daß die weiteren Anschlüsse 16 mit der für die Aufstoßventile notwendigen Muffe genügend weit voneinander angeordnet werden können.

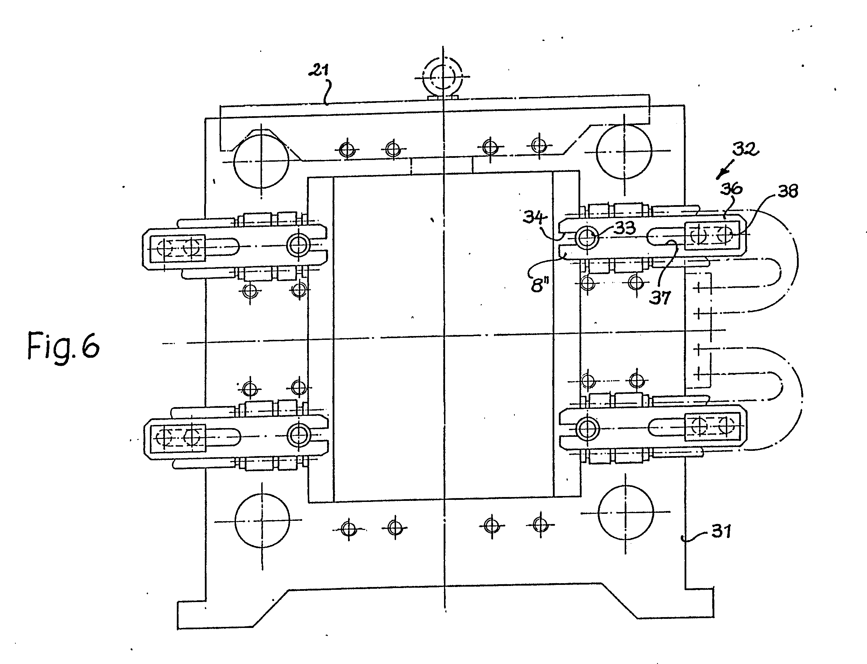

Beim Aufspannen der Werkzeughälfte 4 auf der Werkzeugaufspannplatte 1 wird zunächst die Werkzeughälfte genau relativ zu der - nicht gezeigten - Zentrieröffnung der Werkzeugaufspannplatte 1 ausgerichtet und auch bezüglich ihrer Vertikalausrichtung z.B. mittels eines Meßbalkens 21 (s. Fig. 6) positioniert. Daraufhin werden in alle diejenigen Nuten 2, denen Mündungsanschlüsse 20 an der Flanschleiste 5 des Werkzeuges 4 zugeordnet sind, Aufspann- und Anschlußvorrichtungen 6 eingeschoben und soweit mit ihrer Spannfläche 9 über die Flanschleiste 5 bewegt, daß sie diese übergreifen. Im Zuge dieser Bewegung, die durch die Führungsrippe 17 des Gleitsteines 12 genau senkrecht zu der Flanschleiste 5 verläuft, treten die Mündungsanschlüsse 2o in die Aufstoßventile 18 ein und stellen eine Verbindung mit den zugehörigen Versorgungsleitungen 14 her. Durch in den Aufstoßventilen 18 angeordnete, nicht mit Bezugszeichen versehene Dichtringe ist die notwendige Dichtheit nach außen gewährleistet.

Die Fig. 3 zeigt eine gegenüber der Ausführung gemäß den Fig. 1 und 2 erweiterte Gestaltung, bei der auf jeder Seite der Spannpratze zwei Anschlußpaare 13, 16 mit entsprechenden Zu- oder Ableitungen 14 bzw. 14' angeordnet sind. Die Ableitungspaare 14 bzw. 14' sind beispielsweise Zu- und Ableitungen für ein Temperiermedium unterschiedlicher Temperatur, das zur Einstellung unterschiedlicher Temperaturen in bestimmten Zonen des Werkzeuges 4 dient.

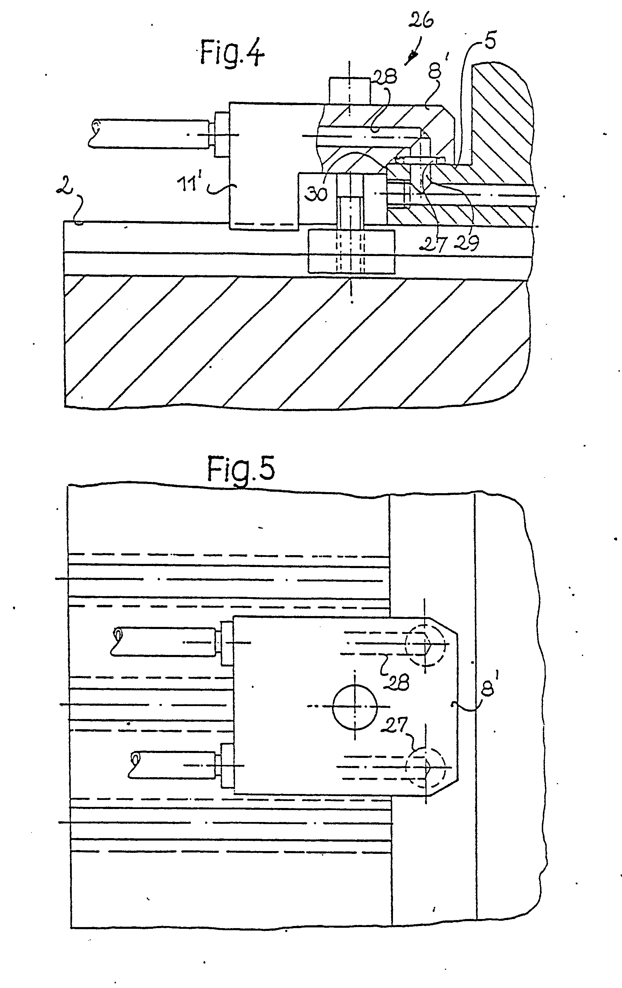

Die Fig. 4 und 5 zeigen eine etwas abgewandelte Ausführungsform, bei der die im Ganzen mit 26 bezeichnete Aufspann- und Anschlußvorrichtung aus einer mit·dem Stützkörper 11' einstückigen Spannpratze 8' besteht, die in gleicher Weise wie bei der Ausführung gemäß den Fig. 1 und 2 in einer der Nuten 2 verschiebbar angeordnet ist. Bei der Vorrichtung 26 werden jedoch die weiteren Anschlüsse 27, die der Flanschleiste 5 zugewendet sind, jeweils durch eine flache kreisförmige Ausnehmung am Ende von Verbindungskanälen 28 in der Spannpratze 8' gebildet. In diese Ausnehmung ist ein O-Ring zum Zweck der Abdichtung eingelegt, der durch eine nicht näher gezeigte Hinterdrehung des Randes der Ausnehmung 27 formschlüssig darin so gehalten ist, daß er im unbelasteten Zustand aus der Spannfläche der Spannpratze 8' etwas nach unten vorspringt. Die Mündungsanschlüsse 29 münden an der Oberseite der Flanschleiste 5, die zu diesem Zweck geschliffen ist. Um sicherzustellen, daß die weiteren Anschlüsse 27 an der Vorrichtung 26 mit den Mündungsanschlüssen 29 in der Spannstellung korrespondieren, weist die Spannpratze 8' eine Anschlagschulter 30 auf, die in der Spannstellung im Bereich der Oberkante der Flanschleiste 5 anliegt. Außerdem ist auch hier der Abstand der weiteren Anschlüsse 27 voneinander gleich dem Abstand der Mündungsanschlüsse 29 gewählt.

Beim Aufspannen des Werkzeuges 4 wird die Aufspann- und Anschlußvorrichtung 26 bei etwas gelöster Befestigungsschraube an die Flanschleiste 5 herangefahren, bis die Schulter 30 an der Oberkante der Flanschleiste 5 anschlägt. Die Ausrichtung der Spannpratze 8' parallel zur Schieberichtung wird durch die ebenfalls an der Unterseite des Stützkörpers 11' vorgesehene Führungsrippe gewährleistet. Durch Anziehen der Befestigungsschraube drückt sich der O-Ring in der Ausnehmung 27 dichtend flach und die Spannfläche der Spannpratze drückt über die Flanschleiste 5 das Werkzeug 4 auf die Werkzeugaufspannplatte.

Die Fig. 8 zeigt am Beispiel einer Werkzeugaufspannplatte 1 mit Nuten 2 ein Anordnungsschema für die Anschlüsse an der Aufspann- und Anschlußvorrichtung einerseits und an der Flanschleiste des Werkzeuges andererseits, das bei den vorstehend geschilderten Ausführungsbeispielen eingehalten ist. Durch dieses Schema wird gewährleistet, daß schon bei der Heranbewegung der Aufspann- und Anschlußvorrichtung an das Werkzeug eine Verbindung der vorrichtungsseitigen und der werkzeugseitigen Anschlüsse erfolgt, ohne daß weitere Manipulationen vorgenommen werden müssen. Dieses Schema sieht vor, daß der Abstand der an der Flanschleiste des Werkzeuges befindlichen Mündungsanschlüsse voneinander gleich dem Abstand 1 von zueinander parallelen Nuten 2 der Werkzeugaufspannplatte 1 ist (vgl. DIN 16 754), und daß das Werkzeug auf der Werkzeugaufspannplatte 1 so zentriert und positioniert ist, daß diese Mündungsanschlüsse genau mittig zwischen zueinander parallelen Nuten 2 zu liegen kommen, d.h. in einem ungeradzahligen Vielfachen von 1/2 von den strichpunktiert eingezeichneten Koordinatenachsen, deren Ursprung im Mittelpunkt der Zentrieröffnung 1' liegt, beabstandet sind. In Fig. 8 sind die Mündungsanschlüsse mit Kreisen angedeutet. Entsprechend sind auch die weiteren Anschlüsse an den Aufspann- und Anschlußvorrichtungen 6 bzw. 26 relativ zu der Mitte des Gleitsteines für die Befestigungsschraube angeordnet, d.h. auch sie weisen voneinander einen Abstand entsprechend dem Abstand 1 auf und liegen von der Mitte des Gleitsteines in einem ungeradzahligen Vielfachen von 1/2 entfernt.

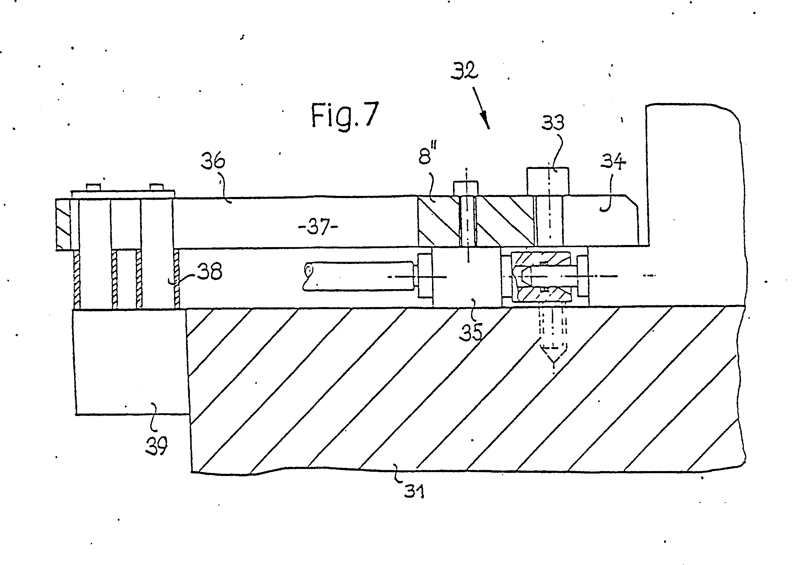

Die Fig. 6 und 7 zeigen eine Ausführungsform, die zum Aufspannen von Werkzeugen auf einer Werkzeugaufspannplatte 31 mit einem Schraubenlochbild gemäß DIN 16 754 bestimmt ist. Bei dieser im Ganzen mit 32 bezeichneten Vorrichtung ist die Spannpratze 8'' relativ zu der fest angeordneten Befestigungsschraube 33 mittels eines am werkzeugseitigen Ende ausgebildeten Langloches 34 verschiebbar. Die Spannpratze ist überdies an ihrer Rückseite über den Stützkörper 35 hinaus verlängert, und in der Verlängerung 36 ist ein weiteres Langloch 37 vorgesehen, das als Führungsfläche für zwei Führungselemente 38 dient. Die Führungselemente 38 sind Zapfen, die mittels eines Blockes 39 am Seitenrand der Werkzeugaufspannplatte 31 angeschraubt sind. Die Mittelpunkte der Zapfen 38 liegen auf einer Gerade, die parallel zu der horizontalen Koordinatenachse verläuft, welche ihrerseits den Mittelpunkt der Werkzeugaufspannplatte 31 durchsetzt.

Bei etwas gelöster Befestigungsschraube 33 kann die Spannpratze 8'' in einem durch das Langloch 37 festgelegten Ausmaß gegenüber den Zapfen 38 verschoben werden. Bei der Heranführung der Spannpratze 8'' an das Werkzeug werden in einer Weise, die schon in Zusammenhang mit der Ausführungsform gemäß den Fig. 1 und 2 beschrieben ist, die an dem Stützkörper 35 vorgesehenen Aufstoßventile durch die Mündungsanschlüsse des Werkzeuges aufgestossen und so eine Verbindung hergestellt.

Die Ausführungsform gemäß den Fig. 9 und 1o entspricht ihrer Funktion nach derjenigen der Fig. 1 und 2. Jedoch ist hier die Spannfläche 9' der Spannpratze 8''' von unten nach oben zum freien Ende hin schräg ansteigend ausgebildet, und die Oberseite der Flanschleiste 5' steigt ensprechend an. Weiterhin besitzt die im Ganzen mit 4o bezeichnete Vorrichtung keine Befestigungsschraube, sondern eine rückwärtige Verlängerung 41 der Spannpratze und einen sich nach unten erstreckenden, an der Verlängerung 41 befestigten Arm 42, der mit der Kolbenstange einer in die Werkzeugaufspannplatte integrierten Kolben-Zylinder-Anordnung 43 verbunden ist. Der Kolbenhub der Kolben-Zylinder-Anordnung 43 verläuft parallel zu der Nut 2 der Werkzeugaufspannplatte, in der der Gleitstein der Vorrichtung 4o gleitet. Durch Einziehen der Kolbenstange wird die Vorrichtung 4o in Richtung auf die Flanschleiste 5' verschoben, so daß sich in der vorstehend bereits geschilderten Weise die Verbindung zwischen den vorrichtungsseitigen und den werkzeugseitigen Anschlüssen ergibt. Zugleich wirken die Spannfläche 9' und die darunter liegende Oberseite der Flanschleiste 5' nach Art von Keilflächen aufeinander, so daß sich die Kolbenkraft der Kolben-Zylinder-Anordnung 43 über diese Flächen in eine Druckkraft umsetzt, welche die Flanschleiste 5' an die Werkzeugaufspannplatte anpresst. Diese Ausführungsform der Aufspann- und Anschlußvorrichtung eignet sich besonders für NC-gesteuerte Spritzgießmaschinen, da hierbei nach dem Positionieren des Werkzeuges relativ zur Werkzeugaufspannplatte programmgesteuert die Betätigung der Vorrichtung vorgenommen werden kann.

Im Rahmen der Erfindung können verschiedene Abänderungen vorgenommen werden. So ist es z.B. denkbar, die Steckanschlüsse an der Flanschleiste des Werkzeuges in Ausnehmungen versenkt anzuordnen, um sie dadurch vor einem Verbiegen bei der Handhabung des Werkzeuges zu schützen. Selbstverständlich müssen diese Ausnehmungen groß genug gewählt werden, um das Einfahren der Aufstoßventile zu gestatten. Weiterhin kann das Spannen der Spannpratzen neben der manuellen Vorgangsweise mittels Spannschraube oder der automatischen Betätigung mittels Pneumatik oder Hydraulik auch durch Exzenter oder dgl. vorgenommen werden. Es ist auch möglich und u.U. sogar empfehlenswert, die an einem Werkzeug vorgesehenen Anschlüsse an einer bestimmten Stelle der Flanschleiste zu konzentrieren und dort eine entsprechend breit ausgelegte Aufspann- und Anschlußvorrichtung anzuordnen, im übrigen aber an den anderen Bereichen der Flanschleisten gewöhnliche oder auch automatisch betätigbare Spannpratzen wirken zu lassen.

Der in Fig. 6 dargestellte Meßbalken 21 ist ein Hilfsmittel zur Justierung und Positionierung des Werkzeuges auf der Werkzeugaufspannplatte. Er ist auf den Durchmesser der Holme der jeweiligen Spritzgießmaschine abgestimmt und erlaubt eine exakte Festlegung der Position des Werkzeuges, die auch für die Funktion der erfindungsgemässen Aufspann- und Anschlußvorrichtung von Bedeutung ist.

In Fig. 6 ist auch strichpunktiert am Seitenrand der Werkzeugaufspannplatte 31 eine Sammelleiste für Versorgungsleitungen angedeutet, von der aus die Leitungen 14 zu den Aufspann- und Anschlußvorrichtungen 32 führen.

- 1 -

## Ansprüche

1. Aufspann- und Anschlußvorrichtung für Werkzeuge von Spritzgießmaschinen oder dgl., mit einer an einer Werkzeugaufspannplatte der Spritzgießmaschine befestigbaren Spannpratze, die im aufgespannten Zustand des Werkzeuges eine an dem Werkzeug ausgebildete Flanschleiste übergreift, dadurch gekennzeichnet, daß die Spannpratze (8, 8', 8'', 8''') einen Anschluß (13) für mindestens eine Leitung (14, 14') zur Zufuhr eines Temperiermediums, von elektrischem Strom oder von Druckluft usw. zum Werkzeug (4) aufweist und an einer ihrer zu der Flanschleiste (5, 5') des Werkzeuges (4) gerichteten Flächen mindestens einen mit dem ersten Anschluß (13) verbundenen weiteren Anschluß (16, 27) besitzt, der in Spannstellung der Spannpratze im aufgespannten Zustand des Werkzeuges an einen in der Flanschleiste (5, 5') angeordneten Mündungsanschluß (2o, 29) einer in dem Werkzeug angeordneten Leitung angeschlossen ist.

2. Vorrichtung nach Anspruch 1, dadurch gekennzeichnet, daß der weitere Anschluß (16, 27) an der relativ zu der Werkzeugaufspannplatte (1) verschiebbaren Spannpratze (8, 8', 8'', 8''') und der Mündungsanschluß (2o, 29) an der Flanschleiste (5, 5') des auf der Werkzeugaufspannplatte (1, 31) zentrierten Werkzeuges (4) in der Bewegungsbahn der Spannpratze liegen, derart, daß die Koppelung dieser beiden Anschlüsse im Zuge der Verschiebung der Spannpratze in Richtung auf die Flanschleiste erfolgt.

3. Vorrichtung nach Anspruch 1, dadurch gekennzeichnet, daß der erste und der weitere Anschluß an der Spannpratze in einem in der Spannpratze verschiebbar gelagerten Anschlußkörper vereinigt sind, derart, daß die Koppelung des Anschlußkörpers mit dem Mündungsanschluß an der Flanschleiste durch Verschiebung des Anschlußkörpers in der Spannstellung der Spannpratze erfolgt.

4. Vorrichtung nach einem der Ansprüche 1 bis 3, dadurch gekennzeichnet, daß die Spannpratze je zwei erste und weitere Anschlüsse (13 bzw. 16) für die Zu- und Abfuhr eines Temperiermediums zum bzw. vom Werkzeug aufweist.

5. Vorrichtung nach einem der Ansprüche 1 bis 4, dadurch gekennzeichnet, daß die weiteren Anschlüsse (16) an der Spannpratze (8, 8', 8'', 8''') durch an einer zu deren Spannfläche (9, 9') annähernd senkrechten Stirnfläche angeordnete Aufstoßventile (18) gebildet sind, die durch vorstehende Mündungsanschlüsse (2o) an der Flanschleiste des Werkzeuges betätigbar sind.

6. Vorrichtung nach einem der Ansprüche 1 bis 4, dadurch gekennzeichnet, daß die weiteren Anschlüsse (27) an der Spannpratze (8') in deren Spannfläche liegen und mit den in der zugeordneten Oberseite der Flanschleiste (5) angeordneten Mündungsanschlüssen (29) korrespondieren, und daß in der Spannpratze (8') oder den mit der Spannpratze verbundenen Leitungen Sperrventile oder elektrische Schalter angeordnet sind.

7. Vorrichtung nach einem der Ansprüche 1 bis 5, dadurch gekennzeichnet, daß die Spannpratze einen in seiner Höhe der Höhe der Flanschleiste (5, 5') wenigstens annähernd entsprechenden Stützkörper (11, 35) aufweist, und daß die Anschlüsse (13, 16) in dem seitlich über die Spannpratze hinaus verlängerten Stützkörper angeordnet sind.

8. Vorrichtung nach einem der Ansprüche 1 bis 7, dadurch gekennzeichnet, daß zur Verwendung der Spannpratze (8'') auf einer mit einzelnen Schraubenlöchern versehenen Werkzeugaufspannplatte (31) die Spannpratze eine rückwärtige Verlängerung (36) mit einer Führungsfläche (37) aufweist, die mit einem an der Werkzeugaufspannplatte befestigbaren Führungselement (38) zusammenwirkt.

9. Vorrichtung nach einem der Ansprüche 1 bis 8, dadurch gekennzeichnet, daß die Spannpratze Anschlüsse für eine Zuleitung eines Temperiermediums sowie für eine Druckluftleitung aufweist, daß den beiden Anschlüssen ein gemeinsamer, mit einem Mündungsanschluß an der Flanschleiste für ein Temperiersystem zusammenwirkender weiterer Anschluß zugeordnet ist, und daß die Spannpratze ein Umschaltventil zur wahlweisen Verbindung eines der beiden Zuleitungs-Anschlüsse mit dem weiteren Anschluß enthält.

10. Vorrichtung nach einem der Ansprüche 1 bis 9, dadurch gekennzeichnet, daß die Spannpratze (8''') zusammen mit ihrem Stützkörper oder ein Teil der Spannpratze relativ zu dem Stützkörper parallel zur Werkzeugaufspannplatte verschiebbar ist und eine zur Verschiebeebene in Schieberichtung geneigt liegende Spannfläche (9') besitzt, die mit einer komplementär geneigten Oberseite der Flanschleiste (5) des Werkzeuges zusammenwirkt, und daß die Spannpratze bzw. der verschiebbare Teil davon mittels einer Kolben-Zylinder-Anordnung (43) relativ zur Werkzeugaufspannplatte verschiebbar ist.

11. Vorrichtung nach einem der Ansprüche 7 bis 10, dadurch gekennzeichnet, daß der Stützkörper (11, 11', 35) eine in eine Nut (2) der Werkzeugaufspannplatte eingreifende Führungsrippe (17) aufweist.

12. Werkzeug für Spritzgießmaschinen zur Verwendung mit einer Aufspann- und Anschlußvorrichtung nach einem der Ansprüche 1 bis 11, dadurch gekennzeichnet, daß das Werkzeug (4) eine Flanschleiste (5, 5') aufweist, die im aufgespannten Zustand von einer oder mehreren Spannpratzen der Aufspann- und Anschlußvorrichtung (6, 26, 32, 40) übergriffen ist, und daß an der Flanschleiste (5, 5') mindestens ein mit einem in der Spannpratze befindlichen Anschluß korrespondierender Mündungsanschluß (20, 29) eines Leitungssystems des Werkzeuges vorgesehen ist.

0069919

Fig.1

Fig.2

Fig.3

Fig.4

Fig.5

Fig.6

0069919

Fig.7

0069919

Fig.8

0069919

Fig.9

Fig. 10

Europäisches
Patentamt

**EUROPÄISCHER RECHERCHENBERICHT**

**0069919**
Nummer der Anmeldung

EP 82 10 5838.5

| | **EINSCHLÄGIGE DOKUMENTE** | | **KLASSIFIKATION DER ANMELDUNG (Int. Cl.³)** |
|---|---|---|---|
| Kategorie | Kennzeichnung des Dokuments mit Angabe, soweit erforderlich, der maßgeblichen Teile | betrifft Anspruch | |
| X | Patent Abstracts of Japan Band 4, Nr. 76, 3. Juni 1980 Seite 138M14 & JP - A - 55 - 39330 -- | 1-3 | B 29 C 1/16 B 29 F 1/00 |
| A | KUNSTSTOFFE, Band 70, Nr. 3, März 1980 München H. DIEBEL "Produktionssteigerung beim Spritzgießen durch Verringern der Maschinen-Stillstandzeiten" Seiten 128 bis 131 * Seite 129 * -- | 1-3 | **RECHERCHIERTE SACHGEBIETE (Int. Cl.³)** B 29 C 1/00 B 29 F 1/00 |
| A | DE - B2 - 2 260 333 (G. SIEMPELKAMP & CO.) * Fig. 1, 2 * -- | 1 | |
| A | GB - A - 1 429 475 (BRITISH UNITED SHOE MACHINERY CO. LTD.) ---- | | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 21-09-1982 | FINDELI |

EPA form 1503.1   06.78